# DEMANDE DE BREVET EUROPEEN

(11) **EP 4 475 057 A1**
(43) Date de publication de la demande: **11.12.2024**
(21) Numéro de dépôt: 23178507.2
(22) Date de dépôt: 09.06.2023
(51) Int. Cl.: G06Q 20/10

(54) **PROCEDE ET PLATEFORME DE PAIEMENT DEMATERIALISE**

(71) Demandeur: Aypomag, 01630 Saint Genis Pouilly (FR)
(72) Inventeur: PERRACHON, Yves, 73340 SAINT FRANCOIS DE SALES (FR)
(74) Mandataire: Tranvouez, Edern Morgan

(57) **Abrégé**

L'invention concerne un Procédé de paiement dématérialisé entre au moins un usager d'un organisme donneur (10A, 10B, 10C) et au moins un organisme fournisseur (30A, 30B) au travers d'une plateforme de distribution de dotations (20). Le procédé comprend en particulier les étapes suivantes : sélection par l'organisme donneur (10A, 10B, 10C) de conditions d'utilisation de dotations vis-à-vis du ou des organismes fournisseurs (30A, 30B) pour au moins un usager; indication par l'usager sur la plateforme de distribution de dotations (20) du ou de l'un des organismes fournisseurs (30A, 30B) auprès duquel il souhaite utiliser sa dotation ; vérification par la plateforme de distribution de dotations (20) que l'organisme fournisseur (30A, 30B) est compatibles avec les conditions d'utilisation de la dotation ; et dans le cas où la vérification est concluante émission d'au moins un jeton de paiement (41A, 41B) pour l'usager.

## Description

### Domaine technique

L'invention concerne le domaine de la fourniture de services de paiement dématérialisé.

L'invention a ainsi plus particulièrement pour objet un procédé de paiement dématérialisé et une plateforme de paiement dématérialisé.

### État de l'art antérieur

Lorsqu'un organisme donneur, tel qu'une entreprise, un comité d'entreprise ou encore une collectivité locale, souhaite octroyer une dotation à l'un de ses usagers, il lui est possible de faire appel à des solutions spécialisées du type « chèques cadeaux, d'accompagnement, de service, de loisir ou d'éducation ».

A l'heure actuelle, ces solutions nécessitent la mise en oeuvre d'une chaîne d'éléments techniques, tels que des sites web dédiés à l'organisme donneur, un système de gestions d'organismes fournisseurs, tels que des magasins, chaîne de magasin, restaurateur, ou encore fournisseur de services, des sites web dédiés aux usagers eux-mêmes, intégrant des intervenants humains pour réaliser l'interface entre les différents systèmes et certaines des transactions.

Ces solutions techniques sont relativement complexes à mettre en oeuvre, elles nécessitent généralement une multitude d'interventions humaines et peuvent donc être à l'origine des charges et risques peu acceptables par les organismes donneurs. On notera, de plus que ces solutions, en raison de la multitude des éléments techniques devant intervenir, sont généralement basées sur les réseaux de paiement par carte, tels que Visa^{™} et Mastercard^{™} et via des passerelles techniques gérées par les établissements de paiement classiques. Il en résulte des frais liés aux transactions réalisées au travers de ces réseaux qu'il pourrait être opportun d'éviter et que ces systèmes ne permettent, à ce jour qu'un fonctionnement de bout en bout que 5 jours sur 7 avec un délai non négligeable pour la remise des flux financiers.

### Exposé de l'invention

L'invention vise à remédier au moins en partie aux inconvénients ci-dessus et a ainsi pour objet la fourniture d'un procédé de paiement qui ne présente pas au moins une partie de ces inconvénients et qui permettent en particulier une gestion simplifiée des dotations que pourraient fournir un organisme donneur à un usager afin qu'il puisse payer un organisme fournisseur au moyen d'une telle dotation, cette gestion simplifiée autorisant un traitement temps réel 7 jours sur 7 et ouvrant la possibilité à des frais de transaction réduits.

L'invention concerne à cet effet un procédé de paiement dématérialisé entre au moins un usager d'un organisme donneur et au moins un organisme fournisseur au travers d'une plateforme de transfert de dotations, le procédé comprenant les étapes suivantes :
- identification de l'organisme donneur auprès de la plateforme, cette identification incluant la fourniture de données de paiement afin de permettre un ordre de transfert de fond entre l'organisme donneur et la plateforme,
- sélection par l'organisme donneur de conditions d'utilisation de dotations sur la plateforme vis-à-vis du ou des organismes fournisseurs,
- indication par l'organisme donneur d'au moins un usager susceptible de bénéficier de l'octroi d'au moins l'une des dotations au travers de la plateforme,
- fourniture à l'usager d'un moyen d'accès à la plateforme,
- octroi par l'organisme donneur à l'usager d'au moins une dotation sur la plateforme,
- indication par l'usager sur la plateforme du ou de l'un des organisme fournisseur et éventuellement d'un ou plusieurs produits/services ou types de produit/service qu'il souhaite obtenir auprès dudit organisme fournisseur à partir de ladite dotation, l'usager indiquant, en outre et de manière préférentielle, la partie de la dotation qu'il souhaite utilisée auprès dudit organisme fournisseur,
- vérification par la plateforme que l'organisme fournisseur et l'éventuel produit/service ou type de produit/service sont compatibles avec les conditions d'utilisation de la dotation qui a été octroyée à l'usager,
- dans le cas où la vérification est concluante et après avoir préalablement récupérer auprès de l'organisme donneur les fonds correspondants à la dotation, émission d'au moins un jeton de paiement pour l'usager,
- usage de l'au moins un jeton de paiement par l'usager auprès de l'organisme fournisseur identifié pour acheter le ou les produits/services, les fonds associés au jeton de paiement usagé étant versé à l'organisme fournisseur par la plateforme.

Un tel procédé permet à partir d'une seule plateforme de gérer l'ensemble des interactions entre les différents intervenants (organisme donneur, usager et organisme fournisseur) pour permettre un tel processus de paiement ceci sans nécessiter d'utiliser les services d'un opérateur de paiement international. Outre, que l'ensemble de ces interactions peuvent être, dans le cadre de la présente invention, aisément automatisées, limitant, voire supprimant, les risques d'erreur, ne nécessitant pas de circulation de données (les données ne peuvent être traitées qu'au sein de la plateforme) ; les données de paiement utilisées pour les ordre de transferts de fond de l'organisme donneur vers la plateforme et de la plateforme vers l'organisme fournisseur peuvent se faire par des solutions de paiement non monétisées, tel qu'un virement et donc sans avoir à faire appel à un réseau de paiement par carte.

De ce fait, avec la présente invention, l'ensemble des transactions entre les parties est sécurisé puisque :
- l'organisme donneur est garanti dans les conditions d'utilisation de ses donations,
- l'usager est garanti en ce qui concerne les dotations reçues et ses possibilités de les utilisées,
- le ou les organismes fournisseurs sont garantis dans le paiement qu'ils reçoivent.

La gestion de contrepartie bancaire peut donc se faire hors processus par opérations bancaires classiques
Ainsi, le procédé selon l'invention résout ainsi l'ensemble des aléas liés aux solutions de l'art antérieur.

Lors de l'étape de fourniture à l'usager du moyen d'accès à la plateforme de distribution de dotations, il peut être fourni des données d'identification pour une application ou un site internet consultable par l'usager sur au moins un dispositif personnel de l'usager, ces données d'identification étant également utilisées lors de l'étape d'octroi de l'au moins une dotation,
l'usagr utilisant ladite application ou ledit site internet afin de renseigner la plateforme lors de l'étape d'indication par l'usager sur la plateforme du ou de l'un des organisme fournisseur et éventuellement d'un ou plusieurs produits/services ou types de produit/service qu'il souhaite obtenir.

Avec de telles données d'identification associées à une application et/ou un site internet, l'usager peut aisément accéder à la plateforme de distribution de dotation ceci même en déplacement. Ainsi, l'usager et à même de récupérer le ou les jetons de paiement à n'importe quel moment. De ce fait, il est à même de faire sa demande de jeton de paiement juste avant de se rendre auprès de l'organisme fournisseur, voire juste avant d'avoir à effectuer le paiement auprès de ce même organisme fournisseur. En effet, selon l'invention, la disponibilité de ses jetons peut être instantanée et être obtenu par un accès à la plateforme de distribution de dotations par l'application ou le site internet.

Lors de l'étape d'émission de l'au moins un jeton de paiement pour l'usager, le ou lesdits jetons de paiement peuvent être fournis à l'usager par l'intermédiaire de l'application ou du site internet.

De cette manière le jeton de paiement est émis par le même biais que celui par lequel l'usager en fait la demande. Il en résulte, en plus d'une facilité d'utilisation, une sécurisation de la fourniture, puisqu'il n'est pas fait appel à un système de transmission du jeton de paiement extérieur, tel que par email, sms ou courrier postal. L'usager est donc certain de récupérer son ou ses jetons de paiement, et l'organisme donneur est assuré de la bonne fourniture de la dotation.

Le ou les jetons de paiement sont fournis sous forme de codes visuels, tels que sous la forme de codes-barres ou de codes à deux dimensions, généralement dits code QR.

Ainsi, l'usager est à même de soumettre le jeton de paiement à l'organisme fournisseur en l'affichant sur un écran de son dispositif personnel.
le ou les jetons de paiement peuvent chacun être configurés pour correspondre à un signal susceptible d'être fourni par l'usager à l'organisme fournisseur par une communication en champ proche, également connu sous le sigle anglais NFC.

Ainsi, par l'utilisation de la communication en champ proche, l'usager n'a besoin que de présenter son dispositif personnel à un lecteur de l'organisme fournisseur pour utiliser le jeton de paiement audit organisme fournisseur.

Le procédé de paiement dématérialisé peut comprendre, préalablement à l'étape d'indication par l'usager sur la plateforme de distribution de dotations du ou de l'un des organisme fournisseur et éventuellement d'un ou plusieurs produits/services ou types de produit/service qu'il souhaite obtenir, les étapes suivantes :
- enregistrement du ou des organismes fournisseurs auprès de la plateforme de distribution de dotations, lors du ou desdits enregistrements, chaque organisme fournisseur fourni des données de paiement afin de permettre un ordre de transfert de fond entre la plateforme de distribution de dotations et l'organisme fournisseur,
lors de l'étape d' usage de l'au moins un jeton de paiement, chaque organisme fournisseur étant apte à lire le jeton de paiement émis lors de l'étape d'émission d'au moins un jeton de paiement pour l'usager lorsqu'il est l'organisme fournisseur préalablement identifié par l'usager.

Le ou chaque organisme fournisseur s'étant identifié préalablement auprès de la plateforme, la plateforme est à même de vérifier la configuration du jeton de paiement à émettre pour que l'usager soit à même de l'utiliser auprès dudit organisme fournisseur.

Lors de l'étape d'enregistrement du ou des organismes fournisseurs auprès de la plateforme de distribution de dotations, chaque organisme fournisseur fourni à la plateforme de distribution de dotations un outil, tel qu'une interface de programmation, apte à générer des jetons de paiement qui puissent être acceptés par l'organisme fournisseur,
lors de l'étape d'émission d'au moins un jeton de paiement pour l'usager, la plateforme de distribution de dotations utilisant l'outil pour générer l'au moins un jeton de paiement.

Avec de tels outils, la plateforme est à même à adapter le jeton de paiement en fonction de l'organisme fournisseur choisi par l'usager. De cette manière l'organisme fournisseur n'a nullement à prévoir une quelconque adaptation pour lire les jetons de paiement. L'intégration de nouveaux organismes fournisseurs en est facilité.

Lors de l'étape de sélection par l'organisme donneur de conditions d'utilisation de dotations sur la plateforme de distribution de dotations vis-à-vis du ou des organismes fournisseurs, l'organisme donneur peut sélectionner au moins une condition relative aux produits/services ou types de produit/service pour lesquels l'usager peut utiliser l'au moins une dotation qui lui est octroyée,
- lors de l'étape d'indication par l'usager sur la plateforme de distribution de dotations du ou de l'un des organisme fournisseur, l'usager identifie également le ou plusieurs produits/services ou types de produit/service qu'il souhaite obtenir auprès dudit organisme fournisseur à partir de ladite dotation,
- lors de l'étape de vérification par la plateforme que l'organisme fournisseur et le produit/service ou type de produit/service sont compatibles avec les conditions d'utilisation de la dotation qui a été octroyée à l'usager, la plateforme de distribution de dotations vérifie que l'au moins une condition relative aux produits/services ou types de produit/service est remplie par le ou les produits/services ou types de produit/service identifiés par le service
- lors de l'étape d'émission d'au moins un jeton de paiement pour l'usager, le ou chaque jeton de paiement émis est apte à être utilisé pour le paiement du ou des produits/services ou types de produit/service vérifiée,
et dans lequel, d'une manière préférentielle, l'outil fourni par le ou chaque organisme fournisseur donne accès à une liste de produits/services ou types de produit/service susceptible d'être fourni par l'organisme fournisseur, cet accès étant utilisé :
- lors de l'étape d'indication par l'usager sur la plateforme du ou de l'un des organisme fournisseur et du ou des produits/services ou types de produit/service qu'il souhaite obtenir ceci afin de permettre à l'usager d'accéder à la liste de produits/services ou types de produit/service, et
- lors de l'émission du jeton de paiement émis, le jeton de paiement incluant une donnée d'identification du ou des produits/services ou types de produit/service indiqué par l'utilisateur lors de l'étape d'indication par l'usager sur la plateforme du ou de l'un des organisme fournisseur et du ou des produits/services ou types de produit/service qu'il souhaite obtenir,
lors de l'étape d'achat du ou des produits/services auprès de l'organisme fournisseur, l'organisme fournisseur vérifie que l'au moins un jeton de paiement à bien été émis pour ce ou ces produits/services avant d'accepter le jeton de paiement.

Avec de telles conditions, l'organisme donneur peut imposer à la plateforme des conditions d'octroi de la dotation et s'assurer que l'usager en fait bien un usage conforme aux conditions défini par l'organisme donneur.

Dans le cadre du présent procédé :
- lors de l'étape d'octroi par l'organisme donneur à l'usager d'au moins une dotation sur la plateforme de distribution de dotations, il est préalablement vérifié que les fonds sont disponibles, l'octroi de la dotation n'est effectif qu'après récupération de la somme correspondante ceci de manière à rendre l'octroi irrévocable,
- lors de l'émission de l'au moins un jeton de paiement pour l'usager, il est vérifié que la dotation a bien été octroyée à l'usager, le jeton de paiement étant émis uniquement après réduction de la dotation de la somme correspondante audit jeton de paiement de manière à rendre l'émission du jeton de paiement irrévocable,
- lors du versement des fonds associés à le ou à chaque jeton de paiement à l'organisme fournisseur, il est vérifié que le ou chaque jeton de paiement a bien été émis, le versement des fonds associés au ou à chaque jeton de paiement n'étant réalisé à l'organisme fournisseur que si le ou chaque jeton de paiement a bien été émis et, d'une manière optionnelle, utilisé auprès de l'organisme fournisseur, de manière à rendre le versement des fonds associés au ou à chaque jeton de paiement irrévocable.

Avec un tel fonctionnement « irrévocable », le procédé selon l'invention permet à l'ensemble des intervenants d'être assurés sur le fait que chaque transaction est irrévocable et que les fonds associés à ladite transaction seront bien attribués.

L'invention concerne en outre une plateforme de distribution de dotations pour le paiement dématérialisé entre un usager d'un organisme donneur et au moins un organisme fournisseur d'un service ou d'un produit, la plateforme de distribution de dotations comprenant :
- un module d'identification de l'organisme donneur configuré pour identifier l'organisme donneur et récupéré, dans le cadre de cette identification des données de paiement aptes à être utilisées pour permettre un transfert de fond entre l'organisme fournisseur et la plateforme,
- un module de sélection de conditions de dotation configuré pour permettre à l'organisme donneur de sélectionner des conditions d'utilisation de dotations sur la plateforme vis-à-vis du ou des organismes fournisseurs,
- un module d'accès pour les usagers de l'organisme donneur, le module d'accès étant configuré pour fournir, sur la base d'une indication de l'organisme donneur, un accès aux usagers à la plateforme et leur permettre de consulter d'éventuelles dotations octroyées par l'organisme donneur à l'usager, ledit module d'accès étant en outre configuré pour permettre à l'usager d'identifier le ou de l'un des organisme fournisseur, éventuellement un ou plusieurs produits/services ou types de produit/service qu'il souhaite obtenir auprès dudit organisme fournisseur à partir de ladite dotation et, d'une manière préférentielle, la partie de la dotation qu'il souhaite utiliser auprès dudit organisme fournisseur
- un module d'émission de jetons de paiement, configuré pour vérifier que l'organisme fournisseur et l'éventuel produit/service ou type de produit/service indiqué par l'usager sont compatibles avec les conditions d'utilisation de la dotation qui a été octroyée à l'usager et pour, si la vérification est concluante après avoir récupéré auprès de l'organisme donneur les fonds correspondants à la dotation, émettre au moins un jeton de paiement pour l'usager,
- Un module d'ordre de transfert de fond configuré pour, une fois l'au moins un jeton de paiement émis ou utilisé, permettre à l'organisme fournisseur les fonds associés au jeton de paiement.

Une telle plateforme de distribution de dotations permet la mise en oeuvre d'un procédé de paiement dématérialisé selon l'invention et de bénéficier des avantages qui y sont associés.

Le module d'accès pour les usagers est configuré pour permettre à l'usager d'interagir avec la plateforme de distribution de dotations au travers d'une application ou un site internet consultable par l'usager sur au moins un dispositif personnel de l'usager et à partir de données d'identification fourni par l'organisme donneur, ces données d'identification étant également utilisées pour l'octroi de l'au moins une dotation,

Le module d'accès autorisant l'usager d'utiliser ladite application ou ledit site internet afin d'indiquer à la plateforme le ou l'un des organisme fournisseur et éventuellement d'un ou plusieurs produits/services ou types de produit/service qu'il souhaite obtenir.

### Brève description des dessins

La présente invention sera mieux comprise à la lecture de la description d'exemples de réalisation, donnés à titre purement indicatif et nullement limitatif, en faisant référence aux dessins annexés sur lesquels :
- la figure 1 illustre schématiquement une plateforme de distribution de dotations selon l'invention et son interaction avec les organismes donneurs, fournisseurs et avec les usagers au travers d'un dispositif personnel, ici un téléphone intelligent ;
- la figure 2 est un schéma fonctionnel des différentes unités de la plateforme.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### Exposé détaillé de modes de réalisation particuliers

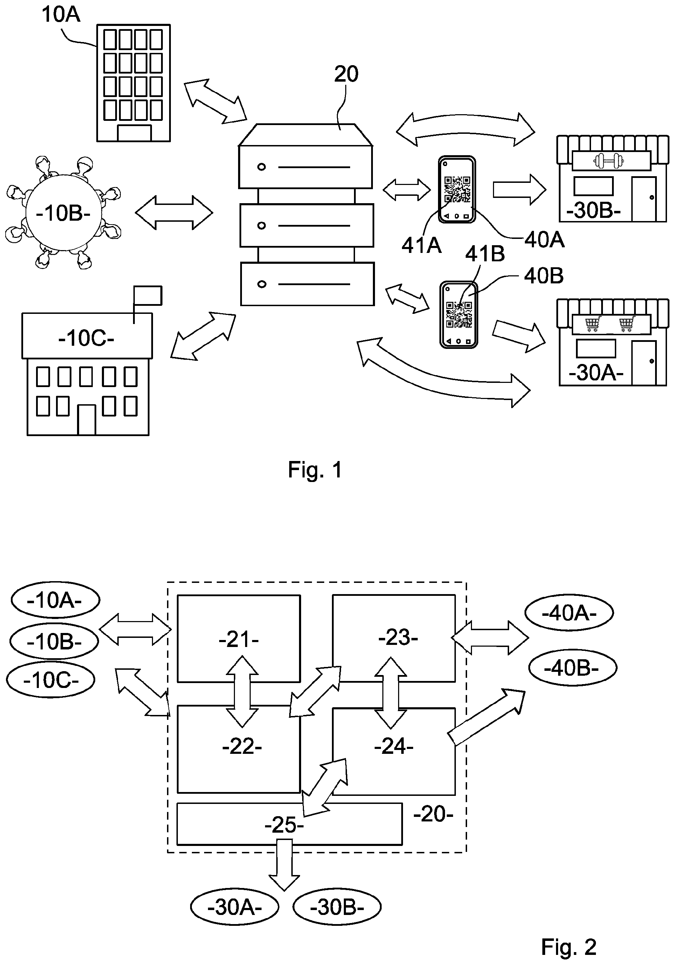

La figure 1 illustre une plateforme de distribution de dotations 20 selon l'invention qui est adaptée à fournir un service de paiement dématérialisé entre au moins un usager d'un organisme donneur 10A, 10B, 10C et au moins un organisme fournisseur 30A, 30B.

Par organisme donneur 10A, 10B, 10C, on entend ci-dessus et dans le reste de ce document un organisme, tel qu'une entreprise 10A, un comité d'entreprise 10B, un syndicat d'initiative, un organisme institutionnel 10C, tel qu'une mairie, une préfecture, un ministère... qui est susceptible d'octroyer des dotations sous forme dématérialisée pour certains de ces usagers. Ainsi par usagers de tels organismes donneurs 10A, 10B, 10C, il est entendu ci-dessus et dans le reste de ce document, une personne physique ayant un lien avec l'organisme donneur et qui est susceptible de recevoir une donation de cette organisme donneur. Ainsi l'usager peut être par exemple, un employé de l'entreprise 10A, un bénéficiaire du n comité d'entreprise 10B, un souscripteur du syndicat d'initiative, ou encore un bénéficiaire de l'organisme institutionnel 10C (par exemple habitant de la ville dont dépend la mairie ou un bénéficiaire d'une aide sociale fournie par la préfecture).

Les organismes fournisseurs 30A, 30B peuvent être des organismes de tous types susceptibles de fournir un produit ou un service à l'usager, tel qu'un commerce 30A, une chaîne de commerces, un organisme culturel (salle de spectacle ou musée par exemple), un fournisseur de service 30B (tel qu'un institut, un parc d'attraction, une salle de sport ou des courts de sports ou culturels).

Comme le montre la figure 1, la plateforme de distribution de dotations 20 permet de faire le lien entre les différents organismes donneur et fournisseur afin de permettre à un organisme donneur 10A, 10B, 10C de fournir une dotation à au moins l'un de ses usagers afin que ce dernier puisse bénéficier, à partir de cette dotation, d'un service ou d'un produit fourni par l'organisme fournisseur 30A, 30B.

Pour permettre la fourniture d'un tel lien, la plateforme de distribution de dotations 20 peut être hébergée au sein d'un serveur, d'un cluster de serveurs ou d'un centre de traitement de données (également connu sous la dénomination anglaise « data-center ») comprenant une pluralité de serveur et comprendre différents modules ou unités dédiés pour permettre une gestion de ce lien installé sur un ou plusieurs de ces serveurs.

Ainsi, par exemple, comme montré sur la figure 2, la plateforme de distribution de dotations 20 comprend :
- un module d'identification 21 de l'organisme donneur 10A, 10B, 10C configuré pour identifier l'organisme donneur 10A, 10B, 10C est récupéré, dans le cadre de cette identification des données de paiement aptes à être utilisées pour permettre un transfert de fond entre l'organisme fournisseur 10A, 10B, 10C et la plateforme de distribution de dotations 20,
- un module de sélection 22 de conditions de dotation configuré pour permettre à l'organisme donneur de sélectionner des conditions d'utilisation de dotations sur la plateforme vis-à-vis du ou des organismes fournisseurs,
- un module d'accès 23 pour les usagers de l'organisme donneur, le module d'accès étant configuré pour fournir, sur la base d'une indication de l'organisme donneur, un accès aux usagers à la plateforme et leur permettre de consulter d'éventuelles dotations octroyées par l'organisme donneur à l'usager, ledit module d'accès étant en outre configuré pour permettre à l'usager d'identifier le ou de l'un des organisme fournisseur, éventuellement un ou plusieurs produits/services ou types de produit/service qu'il souhaite obtenir auprès dudit organisme fournisseur à partir de ladite dotation et, d'une manière préférentielle, la partie de la dotation qu'il souhaite utiliser auprès dudit organisme fournisseur,
- un module d'émission 24 de jetons de paiement 41A, 41B, configuré pour vérifier que l'organisme fournisseur 10A, 10B, 10C et l'éventuel produit/service ou type de produit/service indiqué par l'usager sont compatibles avec les conditions d'utilisation de la dotation qui a été octroyée à l'usager et pour, si la vérification est concluante après avoir récupéré auprès de l'organisme donneur les fonds correspondants à la dotation, émettre au moins un jeton de paiement pour l'usager,
- Un module d'ordre de transfert 25 de fond configuré pour, une fois l'au moins un jeton de paiement émis ou utilisé, permettre à l'organisme fournisseur de récupérer les fonds associés au jeton de paiement.

Comme montré sur la figure 1, le module d'accès 23 pour les usagers peut en outre être configuré pour permettre à l'usager, via par exemple un compte usagé qui lui est associé, d'interagir avec la plateforme de distribution de dotations 20 au travers d'une application ou un site internet consultable par l'usager sur au moins un dispositif personnel 40A, 40B de l'usager et à partir de données d'identification fourni par l'organisme donneur 10A, 10B, 10B, ces données d'identification étant également utilisées pour l'octroi de l'au moins une dotation.

Selon cette possibilité, le module d'accès 23 peut autoriser l'usager d'utiliser ladite application ou ledit site internet afin d'indiquer à la plateforme le ou l'un des organisme fournisseur 40A, 40B et éventuellement d'un ou plusieurs produits/services ou types de produit/service qu'il souhaite obtenir.

De cette manière, l'usager peut accéder à la plateforme au moyen de son dispositif personnel 40A, 40B et ainsi avoir aisément accès à sa ou ses dotations et obtenir le ou les jetons de paiement 41A, 41B.

Comme indiqué ci-dessus, la plateforme de distribution de dotations 20 peut, pour chacun des usagers, généré un compte usager. Un tel compte permet une gestion aisée des dotations qui sont attribuées à l'usager en indiquant toutes les opérations d'octroi de dotations, les conditions d'usage de ces dotations, les opérations d'émission de jetons paiement 41A, 41B à partir desdites dotations. Avec un tel compte usager, l'usager est à même de consulter son solde de dotations, et les conditions associées, afin de déterminer l'usage qu'il souhaite en faire et les jetons de paiement 41A, 41B à émettre pour répondre à ses besoins.

Une telle plateforme permet la mise en oeuvre d'un procédé de paiement dématérialisé comprenant les étapes suivantes :
- identification de l'organisme donneur 10A, 10B, 10C auprès de la plateforme de distribution de dotations 20, cette identification incluant la fourniture de données de paiement afin de permettre un ordre de transfert de fond entre l'organisme donneur 10A, 10B, 10C et la plateforme de distribution de dotations 20,
- sélection par l'organisme donneur 10A, 10B, 10C de conditions d'utilisation de dotations sur la plateforme de distribution de dotations 20 vis-à-vis du ou des organismes fournisseurs 30A, 30B,
- indication par l'organisme donneur 10A, 10B, 10C d'au moins un usager susceptible de bénéficier de l'octroi d'au moins l'une des dotations au travers de la plateforme de distribution de dotations 20,
- fourniture à l'usager d'un moyen d'accès à la plateforme de distribution de dotations 20,
- octroi par l'organisme donneur 10A, 10B, 10C à l'usager d'au moins une dotation sur la plateforme de distribution de dotations 20,
- indication par l'usager sur la plateforme de distribution de dotations 20 du ou de l'un des organismes fournisseurs 30A, 30B et éventuellement d'un ou plusieurs produits/services ou types de produit/service qu'il souhaite obtenir auprès dudit organisme fournisseur 30A, 30B à partir de ladite dotation, l'usager identifiant, en outre et de manière préférentielle, la partie de la dotation qu'il souhaite utiliser auprès dudit organisme fournisseur 30A, 30B,
- vérification par la plateforme de distribution de dotations 20 que l'organisme fournisseur 30A, 30B, et l'éventuel produit/service ou type de produit/service, sont compatibles avec les conditions d'utilisation de la dotation qui a été octroyée à l'usager,
- dans le cas où la vérification est concluante et après avoir préférentiellement récupéré auprès de l'organisme donneur 10A, 10B, 10C les fonds correspondants à la dotation, émission d'au moins un jeton de paiement 41A, 41B pour l'usager,
- usage de l'au moins un jeton de paiement par l'usager auprès de l'organisme fournisseur identifié pour acheter le ou les produits/services, l'organisme fournisseur 30A, 30B étant à même de récupérer les fonds associés au jeton de paiement 41A, 41Bauprès de la plateforme de distribution de dotations 20.

Dans le cadre de l'étape d'identification de l'organisme donneur 10A, 10B, 10C, afin d'assurer la bonne identification de l'organisme donneur 10A, 10B, 10C, il peut être réalisé une vérification du type «connaissance du client », également connu sous le sigle anglais KYC (pour « Know your customer »). De cette manière l'identité de l'organisation donneur 10A, 10B, 10C est rendue certaine. Afin de permettre la génération d'un ordre de transfert de fond à la plateforme, l'organisme donneur 10A, 10B, 10C peut fournir des données de paiement, tel qu'un numéro de compte sous le format dénommé IBAN (sigle anglais correspondant a « international bank account number). Une fois l'organisme donneur 10A, 10B, 10C a été identifié de manière certaine, et fourni les données IBAN, l'organisme donneur 10A, 10B, 10C est à même de commander ses dotations auprès de la plateforme de distribution de dotations 20. Pour permettre un transfert de fond sécurisé, la plateforme de distribution de dotations 20 peut être agréée pour les fonctions de paiement et pour l'Espace unique de paiement en euros (ou SEPA pour « Single Euro Payment Area »).

Afin de permettre une gestion aisée des dotations et des fonds associés, la plateforme de distribution de dotations 20 peut générer un compte donneur pour chaque organisme donneur 10A, 10B, 10C dans lequel est indiqué toutes les opérations de débit et de crédit associés à la fourniture de dotations. Un tel compte donneur peut également, selon les besoins de l'organisme donneur 10A, 10B, 10C permettre de fournir un registre des jetons de paiement émis à partir des dotations octroyées et permettre une extraction de ces jetons de paiement émis.

Une fois l'organisme donneur 10A, 10B, 10C identifié, il est à même de renseigner la plateforme de distribution de dotations et les conditions d'utilisation de dotations qu'il octroie à l'usager dans le cadre de l'étape de « sélection par l'organisme donneur 10A, 10B, 10C de conditions d'utilisation ». Lors de cette étape, l'organisme donneur 10A, 10B, 10C peut ainsi choisir ces conditions parmi, par exemple :
- un ou plusieurs types d'organisme fournisseur, ou directement un ou plusieurs organismes fournisseurs 30A, 30B sélectionnés dans une liste d'organismes fournisseurs 30A, 30B identifiés auprès de la plateforme,
- un ou plusieurs types de produits et/ou services susceptibles d'être fournis par au moins l'un des organismes,
- une période de temps pendant laquelle l'usager peut utiliser la ou les dotations ainsi que les jetons.

Bien entendu, lorsque l'organisme donneur 10A; 10B, 10C souhaite octroyer plusieurs types de dotation, celui-ci peut renseigner les conditions d'utilisation distinctes pour chacun des types de dotation. Ainsi par exemple, un organisme fournisseur 10B du type « comité d'entreprise » peut choisir de fournir :
- une dotation du type « chèque loisirs » qui puisse être utilisée uniquement auprès d'organismes fournisseurs 30A 30B, du domaine social du transport, du logement et du tourisme,
- Une dotation du type « chèque enfant » qui puisse être utilisée uniquement auprès d'organismes fournisseurs 30A, 30B vendant des jouets afin d'acheter uniquement des jouets.

Selon un autre exemple, l'organisme donneur 10C étant un organisme institutionnel 10C, tel qu'une mairie ou une préfecture, il peut octroyer une dotation pour un organisme fournisseur local, tel qu'une boutique de centre-ville, afin que la dotation serve à dynamiser le tissu local. D'une manière identique, ce même organisme institutionnel 10C peut octroyer une dotation qui puisse être utilisée que pour l'achat de produit et/ou de service locaux.

Une fois les conditions d'utilisation déterminée, l'organisme donneur 10A, 10B, 10C peut, au travers de l'étape « indication par l'organisme donneur 10A, 10B, 10C d'au moins un usager susceptible de bénéficier de l'octroi », fournir une liste d'usagers pouvant bénéficier d'une dotation. Bien entendu, lorsque l'organisme donneur 10A, 10B, 10C souhaite octroyer plusieurs types de dotations, il peut fournir une liste d'usagers différente en fonction du type de dotations. Lors de cette indication, l'organisme donneur 10A, 10B, 10C fourni préférentiellement le nom et un moyen de contact, tel qu'un numéro de téléphone ou une adresse courriel, de chaque usager.

Lors de l'étape de « fourniture à l'usager d'un moyen d'accès à la plateforme de distribution de dotations 20 », la plateforme peut communiquer, au travers de ce moyen de contact, le moyen d'accès pour l'utilisateur à la plateforme. Ce moyen d'accès peut se faire par la fourni à l'usager des données d'identification pour une application ou un site internet consultable par l'usager sur au moins un dispositif personnel 40A, 40B de l'usager. Cette application ou un site internet peut ainsi donner un accès sécurisé pour l'usager à la plateforme de distribution de dotations 20.

Ces mêmes données d'identification peuvent être utilisées dans le cadre de l'ensemble des interactions de l'usager avec la plateforme de distribution de dotations 20 étant également utilisées lors de l'étape d'octroi de l'au moins une dotation.

Ces données d'identification peuvent faire appel à une identification à au moins deux facteurs d'authentification différents (également connu sous la dénomination authentification forte) afin de s'assurer que c'est bien l'usager qui accède à la plateforme de distribution de dotations 20 et bénéficie de la dotation.

Lors de cette étape de fourniture « fourniture à l'usager d'un moyen d'accès à la plateforme de distribution de dotations 20 », la plateforme peut également demander, en fonction de ces besoins et en conformité avec la législation nationale en vigueur, des informations relatives à l'usager. Ces informations n'étant qu'à l'usage de la plateforme de distribution de dotations 20 afin d'assurer la bonne gestion des dotations, aucun des organismes donneurs 10A, 10B, 10C et des organismes fournisseurs n'a accès à ces informations relatives à l'usager.

Selon une configuration usuelle de l'invention, lors de la fourniture du moyen d'accès à l'usager, la plateforme de distribution de dotations 20 peut lui associer un compte d'usager sur lequel est attribué la ou les dotations octroyées par l'organisme donneur 10A, 10B, 10C. Selon cette possibilité, l'usager peut être à même d'utiliser son moyen d'accès à la plateforme de distribution de dotations 20 pour consulter son compte d'usager et la ou les dotations qui lui ont été octroyées.

A partir de ce même accès, lors de l'étape d'« indication par l'usager sur la plateforme de distribution de dotations 20 du ou de l'un des organismes fournisseurs 30A, 30B », l'usager est à même de choisir un ou plusieurs organismes fournisseurs auprès du ou desquels il souhaite utilisé sa dotation. Lors de cette indication, de manière optionnelle et en fonction des conditions d'utilisation sélectionnées par l'organisme donneur 10A, 10B, 10C, l'usager peut également avoir à renseigner le type de produit ou de service, voire le produit ou service, qu'il souhaite obtenir auprès dudit organisme fournisseur 30A, 30B à partir de ladite dotation. De même, afin de permettre une meilleure gestion de sa dotation, l'usager peut, en outre et de manière préférentielle, indiquer la partie de la dotation qu'il souhaite utilisée auprès dudit organisme fournisseur 30A, 30B.

A partir des indications fournies par l'usager, la plateforme de distribution de dotations 20 peut vérifier, lors de l'étape de vérification, que l'organisme fournisseur 30A, 30B, et l'éventuel produit/service ou type de produit/service, sont compatibles avec les conditions d'utilisation de la dotation qui a été octroyée à l'usager. Dans le cas où cette vérification est concluante et après avoir préférentiellement récupéré auprès de l'organisme donneur 10A, 10B, 10C les fonds correspondants à la dotation (par exemple sur le compte d'usager de l'usager préalablement crédité), émission et délivrance d'au moins un jeton de paiement 41A, 41B pour l'usager.

Ce jeton est préférentiellement fourni à l'usager par l'intermédiaire de l'application ou du site internet. Selon une première possibilité de l'invention le ou les jetons de paiement 41A, 41B sont fournis sous forme de codes visuels, tels que sous la forme de codes-barres ou de codes à deux dimensions, généralement dits code QR. Selon une autre possibilité, le ou les jetons de paiement sont chacun un signal susceptible d'être fourni par l'usager à l'organisme fournisseur par une communication en champ proche, également connu sous le sigle anglais NFC.

Bien entendu, lors de cette émission, et lors de l'usage du jeton de paiement 41A, 41B par l'usager, l'organisme fournisseur 30A, 30B n'a pas accès aux données de l'usager que ce soit au travers du jeton de paiement 41A, 41B lui-même ou au travers de la plateforme de distribution de dotations 20.

On notera que d'une manière avantageuse, lorsque l'usager a identifié un produit ou un service de l'organisme fournisseur 30A, 30B dont le montant dépasse la dotation qui lui est octroyer, avant l'émission du jeton de paiement 41A, 41B, la plateforme de distribution de dotations 20 peut proposer à l'usager de compléter le reliquat afin que l'usager n'est pas à utiliser de moyen de paiement lors de sa commande auprès de l'organisme fournisseur 30A, 30B.

Lors de l'émission du ou des jetons de paiement 41A, 41B, le ou lesdits jetons de paiement 41A, 41B sont aptes à être lu par l'organisme fournisseur 30A, 30B pour lequel ils sont destinés.

Afin d'assurer une telle possibilité, le procédé selon l'invention peut comprendre, préalablement à l'étape d'indication par l'usager sur la plateforme de distribution de dotations 20 du ou de l'un des organisme fournisseur 30A, 30B et éventuellement d'un ou plusieurs produits/services ou types de produit/service qu'il souhaite obtenir, les étapes suivantes :
- enregistrement du ou des organismes fournisseurs 30A, 30B auprès de la plateforme de distribution de dotations 20, lors du ou desdits enregistrements, chaque organisme fournisseur 30A, 30B fourni des données de paiement afin de permettre un transfert de fond entre la plateforme de distribution de dotations 20 et l'organisme fournisseur 30A, 30B.

D'une manière identique aux organismes donneurs 10A, 10B, 10C, lors de cet étape d'enregistrement, afin d'assurer la bonne identification de l'organisme fournisseur 30A, 30B, il peut être réalisé une vérification du type «connaissance du client », également connu sous le sigle anglais KYC (pour « Know your customer »). De cette manière l'identité de l'organisation fournisseur 30A, 30B est rendue certaine. Afin de permettre un transfert de fond de la plateforme vers l'organisme fournisseur 30A, 30B , l'organisme fournisseur 30A, 30B peut fournir des données de paiement, tel qu'un numéro de compte sous le format dénommé IBAN (sigle anglais correspondant a « international bank account number). Bien entendu, d'une manière identique que pour les organismes donneurs 10A, 10B, 10C, pour permettre l'exécution d'un ordre de transfert de fond sécurisé, la plateforme de distribution de dotations 20 pourra être agréée pour les fonctions de paiement et pour l'Espace unique de paiement en euros (ou SEPA pour « Single Euro Payment Area »).

D'une manière similaire aux organismes donneurs 10A, 10B, 10C et pour permettre une gestion aisée des jetons de paiement 41A, 41B et des fonds associés, comme cela est décrit ci-après concernant le versement des fonds aux organisme fournisseur 30A, 30B, la plateforme de distribution de dotations 20 peut générer un compte fournisseur pour chaque organisme fournisseurs 30A, 30B dans lequel est indiqué toutes les opérations de crédit associés à l'émission des jetons de paiement 41A, 41B. Un tel compte founisseur peut également, selon les besoins de l'organisme fournisseur 30A, 30B permettre de fournir un registre des jetons de paiement émis en sa faveur et permettre une extraction de ces jetons de paiement.

Ainsi lors de l'étape d'usage de l'au moins un jeton de paiement 41A, 41B, chaque organisme fournisseur 30A, 30B est apte à lire le jeton de paiement 41A, 41B émis lors de l'étape d'émission d'au moins un jeton de paiement 41A, 41B pour l'usager lorsqu'il est l'organisme fournisseur 30A, 30B préalablement identifié par l'usager.

Pour se faire, d'une manière préférentielle lors de l'étape d'enregistrement du ou des organismes fournisseurs 30A, 30B auprès de la plateforme de distribution de dotations 20, chaque organisme fournisseur 30A, 30B fourni à la plateforme de distribution de dotations 20 un outil, tel qu'une interface de programmation (ou API pour « Application Programming Interface »), apte à générer des jetons de paiement 41A, 41B qui puissent être acceptés par l'organisme fournisseur,
et, lors de l'étape d'émission d'au moins un jeton de paiement 41A, 41B pour l'usager, la plateforme de distribution de dotations 20 utilise l'outil pour générer l'au moins un jeton de paiement 41A, 41B.

Selon cette possibilité, l'interface de programmation d'au moins une partie des organismes fournisseurs peut autoriser la génération de jetons de paiement 41A, 41B identifiant un produit ou service, voire un type de produit ou de service, pour lequel ledit jeton de paiement 41A, 41B est à même d'être utilisé. De cette manière, l'organisme donneur 10A, 10B, 10C est sécurisé dans l'utilisation de la dotation par l'usager.

Cette même APl peut également donner accès à la plateforme de distribution de dotations 20 à son catalogue produits et/ou service, de tel manière que l'usager soit à même, lors de l'étape d'« indication par l'usager sur la plateforme de distribution de dotations 20 du ou de l'un des organismes fournisseurs 30A, 30B et éventuellement d'un ou plusieurs produits/services ou types de produit/service qu'il souhaite obtenir » le ou les produits/services ou types de produit/service pour le ou lesquels il souhaite utiliser sa dotation.

Une fois le ou les jetons émis, l'usager peut utiliser l'au moins un jeton de paiement auprès de l'organisme fournisseur 30A, 30B identifié pour acheter le ou les produits/services.

En ce qui concerne la récupération des fonds correspondants aux jetons de paiement émis et utilisés par l'usager, plusieurs possibilités sont accessibles dans le cadre du présent procédé :
- l'organisme fournisseur 30A, 30B peut récupérer les fonds associés au jeton de paiement auprès de la plateforme de distribution de dotations, lors de son émission ou lors de son usage ou pour l'ensemble des jetons de paiement 41A, 41B émis ou utilisés sur une période donnée, par exemple mensuelle,
- lors de l'émission du jeton de paiement 41A, 41B, un compte fournisseur étant alors crédité dès cette émission, l'organisme fournisseur étant à même de récupérer les fonds présents sur son compte sur demande ou à une période donnée, par exemple mensuelle,
- lors de l'ouverture du service avec l'organisme fournisseur celui-ci peut demander la mise ne place d'un compte répondant à un mode de fonctionnement en pré-paiement, La gestion de l'encours pouvant alors se faire lors de chaque émission de jetons avec information des seuils de disponibilités transmis par la plateforme, par exemple au moyen de l'interface de programmation fourni par l'organisme fournisseur, lors des émissions.

Afin de fournir des transactions sécurisées, la plateforme de distribution de dotations 20, et le procédé de paiement dématérialisé peut être adaptée pour fournir des transactions irrévocables. Selon cette possibilité :
- lors de l'étape d'octroi par l'organisme donneur 10A, 10B, 10C à l'usager d'au moins une dotation sur la plateforme de distribution de dotations 20, il est préalablement vérifié que les fonds sont disponibles, l'octroi de la dotation est effectif qu'après récupération de la somme correspondante ceci de manière à rendre l'octroi irrévocable,
- lors de l'émission de l'au moins un jeton de paiement 41A, 41B pour l'usager, il est vérifié que la dotation a bien été octroyée à l'usager, le jeton de paiement 41A, 41B étant émis uniquement après réduction de la dotation de la somme correspondant audit jeton de paiement 41A, 41B de manière à rendre l'émission du jeton de paiement irrévocable,
- lors du versement des fonds associés à le ou à chaque jeton de paiement 41A, 41B à l'organisme fournisseur 30A, 30B, il est vérifié que le ou chaque jeton de paiement 41A, 41B a bien été émis, le versement des fonds associés au ou à chaque jeton de paiement n'étant réalisé à l'organisme fournisseur 30A, 30B que si le ou chaque jeton de paiement 41A, 41B a bien été émis et, d'une manière optionnelle, utilisé auprès de l'organisme fournisseur 30A, 30B, de manière à rendre le versement des fonds associés au ou à chaque jeton de paiement 41A, 41B irrévocable.

Selon ces possibilités, lorsque la plateforme de distribution de dotations 20 attribut à chaque organisme donneur un compte donneur, à chaque usager un compte d'usager et à chaque organisme fournisseur 30A, 30B un compte fournisseur :
- l'octroi de la dotation peut être réalisé par un versement de la somme correspondant à la dotation sur le compte d'usager de l'usager bénéficiaire,
- La réduction de la dotation de la somme correspondant audit jeton de paiement 41A, 41B se fait par un retrait de la somme du compte d'usager,
- le versement des fonds associés au ou à chaque jeton de paiement par versement de la somme retirée du compte d'usager sur le compte fournisseur de l'organisme fournisseur 30A, 30B.

## Revendications

1. Procédé de paiement dématérialisé entre au moins un usager d'un organisme donneur (10A, 10B, 10C) et au moins un organisme fournisseur (30A, 30B) au travers d'une plateforme de distribution de dotations (20), le procédé comprenant les étapes suivantes :
- identification de l'organisme donneur (10A, 10B, 10C) auprès de la plateforme de distribution de dotations (20), cette identification incluant la fourniture de données de paiement afin de permettre un ordre de transfert de fond entre l'organisme donneur (10A, 10B, 10C) et la plateforme de distribution de dotations (20),
- sélection par l'organisme donneur (10A, 10B, 10C) de conditions d'utilisation de dotations sur la plateforme de distribution de dotations (20) vis-à-vis du ou des organismes fournisseurs (30A, 30B),
- indication par l'organisme donneur (10A, 10B, 10C) d'au moins un usager susceptible de bénéficier de l'octroi d'au moins l'une des dotations au travers de la plateforme de distribution de dotations (20),
- fourniture à l'usager d'un moyen d'accès à la plateforme de distribution de dotations (20),
- octroi par l'organisme donneur (10A, 10B, 10C) à l'usager d'au moins une dotation sur la plateforme de distribution de dotations (20),
- indication par l'usager sur la plateforme de distribution de dotations (20) du ou de l'un des organismes fournisseurs (30A, 30B) et éventuellement d'un ou plusieurs produits/services ou types de produit/service qu'il souhaite obtenir auprès dudit organisme fournisseur (30A, 30B) à partir de ladite dotation, l'usager identifiant, en outre et de manière préférentielle, la partie de la dotation qu'il souhaite utilisée auprès dudit organisme fournisseur (30A, 30B),
- vérification par la plateforme de distribution de dotations (20) que l'organisme fournisseur (30A, 30B), et l'éventuel produit/service ou type de produit/service, sont compatibles avec les conditions d'utilisation de la dotation qui a été octroyée à l'usager,
- dans le cas où la vérification est concluante et après avoir préférentiellement récupéré auprès de l'organisme donneur (10A, 10B, 10C) les fonds correspondants à la dotation, émission d'au moins un jeton de paiement (41A, 41B) pour l'usager,
- usage de l'au moins un jeton de paiement par l'usager auprès de l'organisme fournisseur identifié pour acheter le ou les produits/services, l'organisme fournisseur (30A, 30B) étant à même de récupérer les fonds associés au jeton de paiement auprès de la plateforme de distribution de dotations (20).

2. Procédé de paiement dématérialisé selon la revendication 1, dans lequel lors de l'étape de fourniture à l'usager du moyen d'accès à la plateforme de distribution de dotations (20) il est fourni à l'usager des données d'identification pour une application ou un site internet consultable par l'usager sur au moins un dispositif personnel (40A, 40B) de l'usager, ces données d'identification étant également utilisées lors de l'étape d'octroi de l'au moins une dotation,
et dans lequel, l'usager utilise ladite application ou ledit site internet afin de renseigner la plateforme lors de l'étape d'indication par l'usager sur la plateforme du ou de l'un des organisme fournisseur et éventuellement d'un ou plusieurs produits/services ou types de produit/service qu'il souhaite obtenir.

3. Procédé de paiement dématérialisé selon la revendication 2, dans lequel lors de l'étape d'émission de l'au moins un jeton de paiement (41A, 41B) pour l'usager, le ou lesdits jetons de paiement (41A, 41B) sont fournis à l'usager par l'intermédiaire de l'application ou du site internet.

4. Procédé de paiement dématérialisé selon l'une quelconque des revendications 1 à 3, dans lequel le ou les jetons de paiement (41A, 41B) sont fournis sous forme de codes visuels, tels que sous la forme de codes-barres ou de codes à deux dimensions, généralement dits code QR.

5. Procédé de paiement dématérialisé selon l'une quelconque des revendications 1 à 4, dans lequel le ou les jetons de paiement sont chacun un signal susceptible d'être fourni par l'usager à l'organisme fournisseur par une communication en champ proche, également connu sous le sigle anglais NFC.

6. Procédé de paiement dématérialisé selon l'une quelconque des revendications 1 à 5 comprenant, préalablement à l'étape d'indication par l'usager sur la plateforme de distribution de dotations (20) du ou de l'un des organisme fournisseur (30A, 30B) et éventuellement d'un ou plusieurs produits/services ou types de produit/service qu'il souhaite obtenir, les étapes suivantes :
- enregistrement du ou des organismes fournisseurs (30A, 30B) auprès de la plateforme de distribution de dotations (20), lors du ou desdits enregistrements, chaque organisme fournisseur (30A, 30B) fourni des données de paiement afin de permettre un transfert de fond entre la plateforme de distribution de dotations (20) et l'organisme fournisseur (30A, 30B),
dans lequel lors de l'étape d' usage de l'au moins un jeton de paiement (41A, 41B), chaque organisme fournisseur (30A, 30B) est apte à lire le jeton de paiement (41A, 41B) émis lors de l'étape d'émission d'au moins un jeton de paiement (41A, 41B) pour l'usager lorsqu'il est l'organisme fournisseur (30A, 30B) préalablement identifié par l'usager.

7. Procédé de paiement dématérialisé selon la revendication 6, dans lequel lors de l'étape d'enregistrement du ou des organismes fournisseurs (30A, 30B) auprès de la plateforme de distribution de dotations (20), chaque organisme fournisseur (30A, 30B) fourni à la plateforme de distribution de dotations (20) un outil, tel qu'une interface de programmation, apte à générer des jetons de paiement (41A, 41B) qui puissent être acceptés par l'organisme fournisseur,
et dans lequel, lors de l'étape d'émission d'au moins un jeton de paiement (41A, 41B) pour l'usager, la plateforme de distribution de dotations (20) utilise l'outil pour générer l'au moins un jeton de paiement (41A, 41B).

8. Procédé de paiement dématérialisé selon la revendication 7, dans lequel :
- lors de l'étape sélection par l'organisme donneur (10A, 10B, 10C) de conditions d'utilisation de dotations sur la plateforme de distribution de dotations (20) vis-à-vis du ou des organismes fournisseurs (30A, 30B), l'organisme donneur (10A, 10B, 10C) sélectionne au moins une condition relative aux produits/services ou types de produit/service pour lesquels l'usager peut utiliser l'au moins une dotation qui lui est octroyée,
- lors de l'étape d'indication par l'usager sur la plateforme de distribution de dotations (20) du ou de l'un des organisme fournisseur (30A, 30B), l'usager identifie également le ou plusieurs produits/services ou types de produit/service qu'il souhaite obtenir auprès dudit organisme fournisseur (30A, 30B) à partir de ladite dotation,
- lors de l'étape de vérification par la plateforme que l'organisme fournisseur (30A, 30B) et le produit/service ou type de produit/service sont compatibles avec les conditions d'utilisation de la dotation qui a été octroyée à l'usager, la plateforme de distribution de dotations (20) vérifie que l'au moins une condition relative aux produits/services ou types de produit/service est remplie par le ou les produits/services ou types de produit/service identifiés par le service
- lors de l'étape d'émission d'au moins un jeton de paiement (41A, 41B) pour l'usager, le ou chaque jeton de paiement (41A, 41B) émis est apte à être utilisé que pour le paiement du ou des produits/services ou types de produit/service vérifiée,
et dans lequel, d'une manière préférentielle, l'outil fourni par le ou chaque organisme fournisseur (30A, 30B) donne accès à une liste de produits/services ou types de produit/service susceptible d'être fourni par l'organisme fournisseur, cet accès étant utilisé :
- lors de l'étape d'indication par l'usager sur la plateforme du ou de l'un des organisme fournisseur et du ou des produits/services ou types de produit/service qu'il souhaite obtenir ceci afin de permettre à l'usager d'accéder à la liste de produits/services ou types de produit/service, et
- lors de l'émission du jeton de paiement émis, le jeton de paiement incluant une donnée d'identification du ou des produits/services ou types de produit/service indiqué par l'utilisateur lors de l'étape d'indication par l'usager sur la plateforme du ou de l'un des organisme fournisseur et du ou des produits/services ou types de produit/service qu'il souhaite obtenir,
dans lequel, lors de l'étape d'achat du ou des produits/services auprès de l'organisme fournisseur, l'organisme fournisseur vérifie que l'au moins un jeton de paiement à bien été émis pour ce ou ces produits/services avant d'accepter le jeton de paiement.

9. Procédé de paiement dématérialisé selon l'une quelconque des revendications 1 à 8, dans lequel :
- lors de l'étape d'octroi par l'organisme donneur (10A, 10B, 10C) à l'usager d'au moins une dotation sur la plateforme de distribution de dotations (20), il est préalablement vérifié que les fonds sont disponibles, l'octroi de la dotation est effectif qu'après récupération de la somme correspondante ceci de manière à rendre l'octroi irrévocable,
- lors de l'émission de l'au moins un jeton de paiement (41A, 41B) pour l'usager, il est vérifié que la dotation a bien été octroyée à l'usager, le jeton de paiement (41A, 41B) étant émis uniquement après réduction de la dotation de la somme correspondant audit jeton de paiement (41A, 41B) de manière à rendre l'émission du jeton de paiement irrévocable,
- lors du versement des fonds associés à le ou à chaque jeton de paiement (41A, 41B) à l'organisme fournisseur (30A, 30B), il est vérifié que le ou chaque jeton de paiement (41A, 41B) a bien été émis, le versement des fonds associés au ou à chaque jeton de paiement n'étant réalisé à l'organisme fournisseur (30A, 30B) que si le ou chaque jeton de paiement (41A, 41B) a bien été émis et, d'une manière optionnelle, utilisé auprès de l'organisme fournisseur (30A, 30B), de manière à rendre le versement des fonds associés au ou à chaque jeton de paiement (41A, 41B) irrévocable.

10. Plateforme de distribution de dotations (20) pour le paiement dématérialisé entre un usager d'un organisme donneur (10A, 10B, 10C) et au moins un organisme fournisseur (30A, 3B) d'un service ou d'un produit, la plateforme de distribution de dotations (20) comprenant
- un module d'identification (21) de l'organisme donneur (10A, 10B, 10C) configuré pour identifier l'organisme donneur (10A, 10B, 10C) et récupéré, dans le cadre de cette identification des données de paiement aptes à être utilisées pour permettre un transfert de fond entre l'organisme fournisseur et la plateforme,
- un module de sélection (22) de conditions de dotation configuré pour permettre à l'organisme donneur de sélectionner des conditions d'utilisation de dotations sur la plateforme vis-à-vis du ou des organismes fournisseurs,
- un module d'accès (23) pour les usagers de l'organisme donneur, le module d'accès étant configuré pour fournir, sur la base d'une indication de l'organisme donneur, un accès aux usagers à la plateforme et leur permettre de consulter d'éventuelles dotations octroyées par l'organisme donneur à l'usager, ledit module d'accès étant en outre configuré pour permettre à l'usager d'identifier le ou de l'un des organisme fournisseur, éventuellement un ou plusieurs produits/services ou types de produit/service qu'il souhaite obtenir auprès dudit organisme fournisseur à partir de ladite dotation et, d'une manière préférentielle, la partie de la dotation qu'il souhaite utiliser auprès dudit organisme fournisseur
- un module d'émission (24) de jetons de paiement (41A, 41B), configuré pour vérifier que l'organisme fournisseur (10A, 10B, 10C) et l'éventuelle produit/service ou type de produit/service indiqué par l'usager sont compatibles avec les conditions d'utilisation de la dotation qui a été octroyée à l'usager et pour, si la vérification est concluante après avoir récupéré auprès de l'organisme donneur les fonds correspondants à la dotation, émettre au moins un jeton de paiement pour l'usager,
- Un module d'ordre de transfert (25) de fond configuré pour, une fois l'au moins un jeton de paiement émis ou utilisé, permettre à l'organisme fournisseur de récupérer les fonds associés au jeton de paiement.

11. Plateforme de distribution de dotations (20) selon la revendication 10, dans laquelle le module d'accès (23) pour les usagers est configuré pour permettre à l'usager d'interagir avec la plateforme de distribution de dotations (20) au travers d'une application ou un site internet consultable par l'usager sur au moins un dispositif personnel (40A, 40B) de l'usager et à partir de données d'identification fourni par l'organisme donneur (10A, 10B, 10B), ces données d'identification étant également utilisées pour l'octroi de l'au moins une dotation,
Le module d'accès (23) autorisant l'usager d'utiliser ladite application ou ledit site internet afin d'indiquer à la plateforme le ou l'un des organisme fournisseur (40A, 40B) et éventuellement d'un ou plusieurs produits/services ou types de produit/service qu'il souhaite obtenir.
